# EUROPEAN PATENT SPECIFICATION

(11) **EP 3 763 892 B1**
(45) Date of publication and mention of the grant of the patent: **26.10.2022**
(21) Application number: 20183746.5
(22) Date of filing: 02.07.2020
(51) Int. Cl.: E03F 5/10, G05D 9/02, E03F 7/04, E03F 1/00, F16K 31/30, F16K 3/02

(54) **SEWAGE OR STORMWATER SYSTEM**
ABWASSER- ODER REGENWASSERSYSTEM
SYSTÈME D'ÉVACUATION DES EAUX USÉES OU DES EAUX PLUVIALES

(30) Priority: 08.07.2019 SE 1950863
(43) Date of publication of application: 13.01.2021
(73) Proprietor: Sjöbert, Stefan, 294 76 Sölvesborg (SE)
(72) Inventor: Sjöbert, Stefan, 294 76 Sölvesborg (SE)
(74) Representative: AWA Sweden AB

(56) References cited:
- CA-A- 1 225 384
- KR-A- 20120 013 572
- US-B2- 9 850 635

## Description

### Technical Field

The present invention relates to a sewage or stormwater system comprising a controller well, a first pipeline, and a flow controller arranged to control flow in the sewage or stormwater system, wherein the sewage or stormwater system further comprises at least a reservoir or a stormwater well, which via the first pipeline is connected to the controller well, in which the flow controller is housed and from which a second pipeline leads to said sewage or stormwater system, wherein the flow controller comprises a slide and a float, which is directly connected to the slide and arranged to displace the slide in dependence on a water level in the controller well.

### Prior Art

From, for example, the document DE 37 25 392 A1 a flow controller is known, which is arranged to keep outflow from a duct system constant independent of a pressure situated upstream of the flow controller. The flow controller is arranged in a well and can, with the aid of a vertically displaceable slide, close or open an outlet of the well. The known flow controller works with a float, which is affected by a water level in the well and, depending on the water level, lifts and lowers the slide by means of a linkage system.

A disadvantage of the known flow controller is that it is relatively complicated and bulky. Another disadvantage is that its linkage system requires some maintenance of the included joints in order not to get stuck and to keep the flow controller working. And a further disadvantage of the known flow controller is that it is relatively sensitive to contaminants, especially in a situation where the slide is only marginally lifted and the outlet of the well is restricted. In such a situation, the contaminants tend to quickly clog the outlet, which means that the water level in the well rises. The rising water level lifts the float, which via the linkage system pushes the slide downwards, which in turn further limits the outflow. The flow controller thus no longer works as intended and requires a manual action to be taken to become functional again.

In the document US 9 850 635 B2 a flow controller for an irrigation network is revealed. The flow controller comprises disk shaped slides which are moved by means of floaters that interact with the slides by means of a linkage system. The opening direction of the sliders is a downward one and the closing direction an upward one. This means that the flow controller according to this document suffers from the same disadvantages as the flow controller according to the previous document.

From the document KR 2012 0013572 A a flow controller for a sewage system is known. The flow controller comprises the features of the preamble and reveals a slider directly influenced by two floaters. The slider is mounted on a separate frame between the two floaters, which renders the flow controller bulky. Closing and opening of the known flow controller is controlled by the two floaters which move the slider, which is provided with an opening, up and down in front of the mouth of a sewage pipe.

### Object of the Invention

In view of the disadvantages of the known flow controllers, the object of the present invention is to provide a sewage or stormwater system comprising an improved flow controller which is simpler in structure and less space-consuming and which requires less maintenance and is able to handle contaminants better.

### Brief Summary of the Invention

This object is achieved according to the present invention by means of a sewage or stormwater system which comprises the features of the preamble and is characterized in that it comprises a pipe piece which is connected to the first pipeline and opens into the controller well, in that the pipe piece has a substantially horizontal portion, in which from below a vertical groove is cut out across the pipe piece on either side thereof up to about half the diameter of the pipe piece, in that the slide comprises a disc-shaped portion which extends from below into the groove and is vertically displaceable in relation to this, and in that the disc-shaped portion has an upper part with a shape which is complementary to an upper half of the inner cross-sectional area of the pipe piece, and a lower part which is large enough to cover a lower half of the outer cross-sectional area of the pipe piece.

Before a reservoir or a stormwater well, there is usually some form of grid, which takes care of coarser objects. In addition, before or in a reservoir or a stormwater well, there is usually a so-called sand trap, in which particles heavier than water collect. This means that possible other particles, such as leaves and small debris, which can reach the controller well together with water from a reservoir or a stormwater well, are most probably floating. By designing the slide according to the invention, i.e. so that the amount of water flowing into the controller well from the first pipeline is controlled with a displacing movement of the slide from below and up to close the pipe piece and with a displacing movement of the slide from top to bottom for opening of the pipe piece, such floating particles are practically not hindered at all by the slide as long as a flow through the pipe piece is to be maintained. In addition, the solution according to the invention can mean that the flow rate past the slide, in a position when it is on its way up for closing, can increase somewhat, which also contributes to floating particles being pulled past the slide. Contrary, i.e. when the slide of the float is allowed to slide downwards or when the slide is pressed down manually in connection with maintenance, all remaining floating particles are immediately rinsed out, which also contributes to a reduced or simplified maintenance.

A further advantage of the sewage or stormwater system comprising a flow controller according to the invention is that the simple construction makes it relatively cheap, robust and practically maintenance-free, especially as no tight fit is required between the disc-shaped portion of the slide and the groove it runs in. In addition, the flow controller is relatively compact, easy to install and integrating into a sewage or stormwater system.

A further advantage is that via the controller well it is easily possible to access and, if desired, limit the size of the outlet to the second pipeline, i.e. the one leading on the sewage or stormwater from the well.

And a final advantage of the flow controller of the sewage or stormwater system according to the invention is that it can helpfully serve as a non-return valve against return flows in the sewage or stormwater system.

According to a preferred embodiment, the slide comprises a first and a second arm, which from the lower part of the slide on both sides extend past the upper part of the slide and the pipe piece and which are connected to the float at the top. An advantage of this solution is that it makes it possible to prepare the pipe piece for co-operation with the slide through a simple cut which passes through half the pipe piece and thus forms the groove for the slide. In addition, the arms on either side of the pipe piece work well to balance and guide the slide in relation to the pipe piece. However, it is also conceivable to provide the slide with only one and then preferably central arm, which extends through an opening at the top of the pipe piece, for cooperation with the float, or to design the float two-part with one float part per arm.

The slide is preferably cut out of a single flat piece of sheet metal, which comprises the disc-shaped portion of the slide and the two arms and between them defines a passage opening. The sheet metal piece suitably consists of stainless material and can easily be cut with laser technology or the like. It helps to minimize production costs and makes it possible to easily create special solutions adapted to different diameters and shapes of the flow controller pipe piece.

The float of the system preferably has a skirt at the bottom, which is arranged to rest on the upper side of the pipe piece in a completely open position of the slide and which has a shape at the bottom which is complementary to this upper side. The skirt is suitably made of a tube, which has approximately the same diameter as the pipe piece of the flow controller and is applied with an end surface facing the pipe piece. The end surface is formed complementary to the pipe piece, which normally has a circular shape, which means that the end surface in question is normally cut out of a semicircular shape. It is also possible to use the skirt for connecting the slide to the float and thereby to use a simpler foam material for the float itself, provided that the skirt can be securely connected to the float, for example by gluing. It is also conceivable to place the float in a wire basket or the like in order to protect it against floating particles or debris in the controller well and in this way to ensure reliable function.

Preferably, the controller well, in which the flow controller is arranged, has an inlet for the first pipeline and an outlet for the second pipeline, the pipe piece of the flow controller being connected to the inlet and being arranged at a level completely below the outlet. As long as this minimal level difference exists (and preferably is not exaggerated in the other direction, i.e. is increased substantially), good conditions are created for achieving a well-functioning unit of flow controller and controller well. When placing the float further down the slide, it is, however, also possible to arrange the inlet and outlet closer to each other in height or even at the same height. When it comes to the inlet, it is, however, important to consider that the inlet must always be placed high enough up from the bottom of the controller well so that the slide can open the pipe piece completely unhindered.

Finally, the pipe piece is preferably releasably connected to the inlet by means of a sleeve arrangement. Such sleeve arrangements are well known and include solutions with pipe sleeves which are held together either by means of elastic sealing rings, glue or sealant or rivet or screw joints. In this case, it is important to point out that absolute tightness is not required for the invention, whether it concerns the connection of the pipe piece to the inlet or the interaction of the pipe piece with the slide.

### Brief Description of the Drawings

The drawings show a preferred embodiment of the invention, wherein:
Fig. 1 schematically illustrates a sewage or stormwater system with a flow controller according to the invention;
Fig. 2 schematically and partly in section shows the flow controller in a fully open position from one end;
Fig. 3 schematically shows the flow controller according to Fig. 2 in a semi-open position; and
Fig. 4 schematically shows the flow controller according to Fig. 2 in a closed position.

### Detailed Description of a Preferred Embodiment

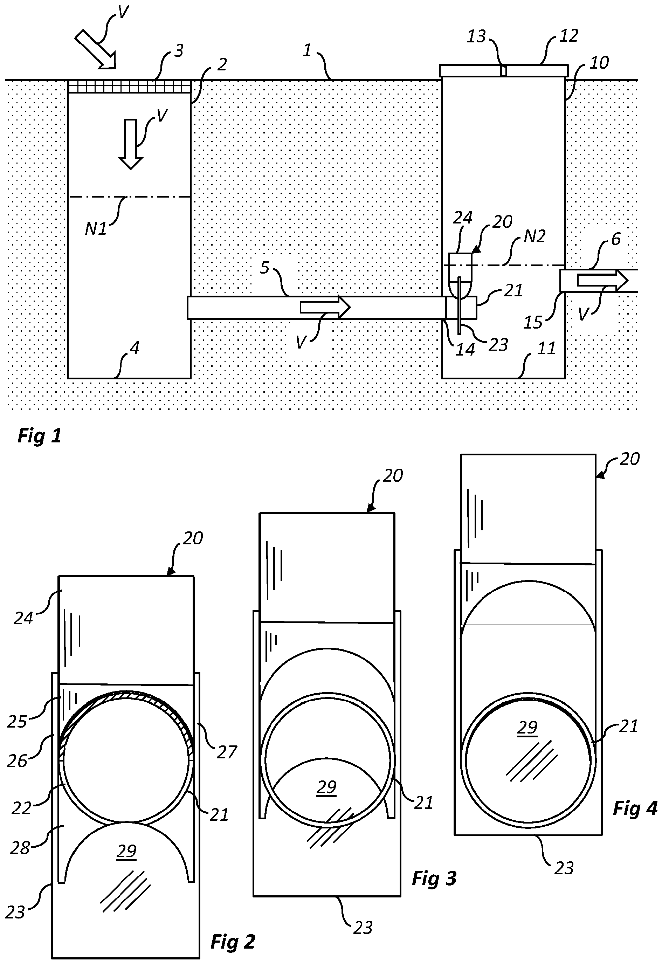

Fig. 1 schematically shows how a flow controller 20 comprised in a sewage or stormwater system according to the present invention is intended to be used. In the figure, 1 denotes a piece of land in which the sewage or stormwater system is located. The system is not shown further, except for a stormwater well 2 and a first and a second pipeline 5, 6. The stormwater well 2 has at ground level a grid 3, which lets the water through, which is illustrated by means of an arrow, and smaller particles, such as leaves and sand, but is arranged to keep away larger objects, such as branches and stones, and at the bottom a space 4, which can serve as a so-called sand trap. The first pipeline 5 is arranged to direct water V from the stormwater well 2 to a controller well 10 when a water level N1 in the stormwater well 2 is higher than the level of the first pipeline 5.

The controller well 10 may, for example, be made of a plastic pipe provided with a fixed bottom 11 and a removable lid 12, which has a vent hole 13. The controller well 10 has an inlet 14, to which the first pipeline 5 connects tightly, and a outlet 15, which is at a level above the inlet 14 and to which the second pipeline 6 connects tightly.

The first pipeline 5 preferably projects a little bit into the controller well 10 and after removal of the lid 12 makes it possible to easily mount a flow controller 20 directly on the pipeline 5. For this purpose, the flow controller 20 comprises a pipe piece 21, which preferably is pushed on the outside of the pipeline 5 and retained on it, for example by means of a rubber gasket, just as with a pipe socket. The pipe piece 21 carries a slide 23, on which a float 24 is mounted.

The flow controller 20 and its parts are described in more detail below with reference to the more detailed end views in Figs. 2-4. In these, 21 denotes the above-mentioned pipe piece, which is thus fixed in the controller well 10 in Fig. 1 on the pipeline 5 and which, as can be seen in the preferred embodiment, has a circular cross-section.

Fig. 2 shows the pipe piece 21 in cross section sectionated where the slide 23 is located. It can be seen from the cross section that a groove 22 is formed from below in the pipe piece 21 and that this groove 22 extends up to approximately the middle of the pipe piece 21. It can also be seen from Fig. 2 that the slide 23 at the bottom has a disc-shaped portion 29, which is arranged across the pipe piece 21. The groove 22 has a groove width and the disc-shaped portion 29 a disc thickness which is so adapted to each other that the disc-shaped portion 29 is guided by the groove 22 but can still be easily displaced therein. In other words, no absolute watertightness is required. The disc-shaped portion has a maximum width which exceeds the diameter of the pipe piece 21 and a height which is at least sufficiently large to be able to cover and thereby close the pipe piece 21.

For such closure, the disc-shaped portion 29 of the slide 23 has an upper part with a shape which is complementary (i.e. is semicircular) with an upper half of the inner cross-sectional area of the pipe piece 21, wherein its function is described further down when Figs. 3 and 4 are discussed. From Fig. 2 it can be seen that the lower part of the disc-shaped portion 29 is wider than its upper part and that it comprises a first and a second arm 26, 27, which extend upwards on either side of the pipe piece 21 past the pipe piece 21 and past the narrower upper part of the tubular portion 29. At the top, above the pipe piece 21, the arms 26, 27 are connected to the above-mentioned float 24, for example by means of a screw connection (not shown).

The float 24 consists of some form of floating body, for example of cellular plastic, and preferably has a skirt 25 at the bottom. This is semicircularly cut out at the bottom in order, as can be seen in particular from Fig. 2, to fit the outer contour of the pipe piece 21. Between the float 24 with its skirt 25, the two arms 26, 27 and the disc-shaped portion 29, the slide 23 has a passage 28, the function of which is described below in connection with the image sequence in Figs. 2-4 and with reference also to Fig. 1.

Fig. 2 shows the slide 23 in its bottom position, which it occupies as long as the float 24 does not provide any or only a very limited lifting force. In the view in Fig. 1, this would mean that a water level N2 in the controller well 10 would be lower than shown and perhaps so low that all outflow showing the second pipeline 6 has ceased. In the bottom position, the skirt 25 rests on the pipe piece 21 and thus helps to straighten and center the slide 23.

In Fig. 3 the slide 23 is shown in an intermediate position, which could correspond to a position with a water level N2 as shown in Fig. 1. In this position the float 24 has lifted the slide 23 a bit, which means that the upper part of the disc-shaped portion 29 of the slide 23 has been pushed a bit upwards through the groove 22 (Fig. 2) into the pipe piece 21. As a result, the flow of water V through the passage 28 and the pipe piece 21 and into the controller well 10 is restricted and some water V must be taken care of upstream other than via the sewage or stormwater system.

In Fig. 4, the slide 23 is shown in a closed position, which occurs when the water level N2 in the controller well 10 is so high (higher than shown in Fig. 1) that the float 24 lifts the slide as far as possible. In the closed position, the upper part of the disc-shaped portion 29 of the slide 23 abuts, so to speak, the roof of the pipe piece 21 and, due to the contour similarity, completely clogs the pipe piece 21. This stops the flow of water V (apart from a certain harmless leakage flow) water V is taken care of upstream in other ways than via the sewage or stormwater system.

The system with flow controller 20 described above is admittedly extremely simple in its construction, however the solution with closure or clogging from below entails, as mentioned in the introduction, significant advantages, since it is mainly floating material which accompanies the water V which flows into the controller well 10.

## Claims

1. Sewage or stormwater system comprising a controller well (10), a first pipeline (5), and a flow controller (20) arranged to control flow in the sewage or stormwater system, wherein the sewage or stormwater system further comprises at least a reservoir or a stormwater well (2), which via the first pipeline (5) is connected to the controller well (10), in which the flow controller (20) is housed and from which sewage or stormwater is suitable for being led on therefrom by means of a second pipe (6),
wherein the flow controller (20) comprises a slide (23) and a float (24), which is directly connected to the slide (23) and arranged to displace the slide (23) in dependence on a water level (N2) in the controller well (10),
**characterized in**
**that** the flow controller (20) comprises a pipe piece (21) which is connected to the first pipeline (5) and opens into the controller well (10),
**that** the pipe piece (21) comprises a substantially horizontal portion, in which from below a vertical groove (22) is cut out across the pipe piece (21) on either side thereof up to approximately half the diameter of the pipe piece (21),
**that** the slide (23) has a disc-shaped portion (29), which extends from below into the groove (22) and is vertically displaceable relative thereto, and
**that** the disc-shaped portion (29) comprises an upper part with a shape which is complementary to an upper half of the inner cross-sectional area of the pipe piece (21), and a lower part which is so large that it can cover a lower half of the outer part of the pipe piece (21) cross-sectional area.

2. Sewage or stormwater system according to claim 1, wherein the slide (23) comprises a first and a second arm (26, 27), which from the lower part of the slide (23) on both sides extend beyond the upper part of the slide (23) and the pipe piece ( 21) and which are connected at the top to the float (24).

3. Sewage or stormwater system according to claim 1 or 2, wherein the slide (23) is cut out of a single flat piece of sheet metal, which comprises the disc-shaped portion (29) of the slide and the two arms (26, 27) and between them defines a passage (28).

4. Sewage or stormwater system according to any of claims 1 to 3, wherein the float (24) has a skirt (25) at the bottom, which is arranged to rest on a top of the pipe piece (21) in a completely open position of the flow controller (20) and which at the bottom has a shape which is complementary to this top.

5. Sewage or stormwater system according to any one of claims 1-4, wherein the controller well (10) has an inlet (14) for the first pipeline (5) and an outlet (15) for the second pipeline (6), wherein the flow controller (20) pipe piece (21) is connected to the inlet (14) and is arranged at a level completely below the outlet (15).

6. Sewage or stormwater system according to claim 5, wherein the pipe piece (21) is releasably connected to the inlet (14) by means of a socket arrangement.

## Patentansprüche

1. Abwasser- oder Regenwassersystem aufweisend einen Kontrollschacht (10), eine erste Rohrleitung (5) und einen Durchflussregler (20), welcher dafür eingerichtet ist, den Durchfluss im Abwasser- oder Regenwassersystem zu regeln,
wobei das Abwasser- oder Regenwassersystem ferner mindestens einen Behälter oder einen Regenwasserschacht (2) aufweist, welcher über die erste Rohrleitung (5) mit dem Kontrollschacht (10), in welchem der Durchflussregler (20) untergebracht ist und welcher dafür geeignet ist, dass Abwasser oder Regenwasser von diesem mittels eines zweiten Rohrs (6) weitergeleitet werden kann, verbunden ist,
wobei der Durchflussregler (20) einen Schieber (23) und einen Schwimmer (24), welcher direkt mit dem Schieber (23) verbunden und dafür eingerichtet ist, den Schieber (23) in Abhängigkeit von einem Wasserpegel (N2) im Kontrollschacht (10) zu verschieben, aufweist,
**dadurch gekennzeichnet,**
**dass** der Durchflussregler (20) ein Rohrstück (21), welches mit der ersten Rohrleitung (5) verbunden ist und sich in den Kontrollschacht (10) öffnet, aufweist,
das das Rohrstück (21) einen im Wesentlichen horizontalen Abschnitt aufweist, in welchem von unten eine vertikale Nut (22) quer durch das Rohrstück (21) an beiden Seiten desselben hinauf bis ungefähr zur Hälfte des Durchmessers des Rohrstück (21) ausgeschnitten ist,
**dass** der Schieber (23) einen scheibenförmigen Abschnitt (29) aufweist, welcher sich von unten in die Nut (22) erstreckt und relativ zu dieser vertikal verschiebbar ist, und
**dass** der scheibenförmige Abschnitt (29) einen oberen Teil mit einer Form, welche komplementär zu einer oberen Hälfte der inneren Querschnittsfläche des Rohrstücks (21) ist, und einen unteren Teil, welcher so groß ist, dass er eine untere Hälfte des äußeren Teils der Querschnittsfläche des Rohrstücks (21) abdecken kann, aufweist.

2. Abwasser- oder Regenwassersystem nach Anspruch 1, wobei der Schieber (23) einen ersten und einen zweiten Arm (26, 27) aufweist, welche sich vom unteren Teil des Schiebers (23) auf beiden Seiten über den oberen Teil des Schiebers (23) und das Rohrstück (21) hinaus erstrecken, und welche an der Oberseite mit dem Schwimmer (24) verbunden sind.

3. Abwasser- oder Regenwassersystem nach Anspruch 1 oder 2, wobei der Schieber (23) aus einem einzelnen flachen Stück Metallblech ausgeschnitten ist, welches den scheibenförmigen Abschnitt (29) des Schiebers und die beiden Arme (26, 27) aufweist und zwischen diesen einen Durchlass (28) definiert.

4. Abwasser- oder Regenwassersystem nach einem der Ansprüche 1 bis 3, wobei der Schwimmer (24) eine Einfassung (25) an der Unterseite aufweist, welche dafür eingerichtet ist, in einer vollständig geöffneten Position des Durchflussreglers (20) an einer Oberseite des Rohrstücks (21) aufzuliegen, und welche an der Unterseite eine Form aufweist, welche komplementär zu dieser Oberseite ist.

5. Abwasser- oder Regenwassersystem nach einem der Ansprüche 1 - 4, wobei der Kontrollschacht (10) einen Einlass (14) für die erste Rohrleitung (5) und einen Auslass (15) für die zweite Rohrleitung (6) aufweist, wobei das Rohrstück (21) des Durchflussreglers (20) mit dem Einlass (14) verbunden und auf einer Ebene vollständig unterhalb des Auslasses (15) angeordnet ist.

6. Abwasser- oder Regenwassersystem nach Anspruch 5, wobei das Rohrstück (21) mittels einer Muffenanordnung lösbar mit dem Einlass (14) verbunden ist.

## Revendications

1. Système d'égout ou d'eaux pluviales comprenant un puits régulateur (10), une première canalisation (5) et un régulateur de débit (20) agencé pour réguler le débit dans le système d'égout ou d'eaux pluviales, dans lequel le système d'égout ou d'eaux pluviales comprend en outre au moins un réservoir ou un puits d'eaux pluviales (2), qui via la première canalisation (5) est raccordé au puits régulateur (10), dans lequel le régulateur de débit (20) est renfermé et à partir duquel des eaux usées ou des eaux pluviales sont aptes à être guidées au moyen d'un deuxième tuyau (6),
dans lequel le régulateur de débit (20) comprend un coulisseau (23) et un flotteur (24), qui est directement raccordé au coulisseau (23) et agencé pour déplacer le coulisseau (23) en fonction d'un niveau d'eau (N2) dans le puits régulateur (10), **caractérisé en ce que** le régulateur de débit (20) comprend un tronçon de conduite (21) qui est raccordé à la première canalisation (5) et débouche dans le puits contrôleur (10),
**en ce que** le morceau de tuyau (21) comprend une partie sensiblement horizontale, dans laquelle depuis le bas une rainure verticale (22) est découpée à travers le morceau de tuyau (21) de chaque côté de celui-ci jusqu'à environ la moitié du diamètre du morceau de tuyau (21), que le coulisseau (23) a une partie en forme de disque (29), qui s'étend depuis ci-dessous dans la rainure (22) et est déplaçable verticalement par rapport à celle-ci, et
**en ce que** la partie en forme de disque (29) comprend une partie supérieure avec une forme qui est complémentaire à une moitié supérieure de la section intérieure de le morceau de tuyau (21), et une partie inférieure qui est si grande qu'elle peut recouvrir une moitié inférieure de la partie extérieure de la section transversale du morceau de tuyau (21).

2. Système d'égout ou d'eaux pluviales selon la revendication 1, dans lequel le coulisseau (23) comprend un premier et un deuxième bras (26, 27), qui depuis la partie inférieure du coulisseau (23) des deux côtés s'étendent au-delà de la partie supérieure du coulisseau (23) et la tubulure (21) et qui sont raccordés en partie haute au flotteur (24).

3. Système d'égout ou d'eaux pluviales selon la revendication 1 ou 2, dans lequel le coulisseau (23) est découpé dans une seule pièce de tôle plate, qui comprend la partie en forme de disque (29) du coulisseau et les deux bras (26, 27) et définit entre eux un passage (28).

4. Système d'égout ou d'eaux pluviales selon une quelconque des revendications 1 à 3, dans lequel le flotteur (24) comporte une jupe (25) à la base, qui est agencée pour reposer sur un sommet de la tubulure (21) dans une position complètement ouverte du régulateur de débit (20) et qui à la base présente une forme qui est complémentaire à ce sommet.

5. Système d'égout ou d'eaux pluviales selon une quelconque des revendications 1 à 4, dans lequel le puits régulateur (10) comporte une entrée (14) pour la première canalisation (5) et une sortie (15) pour la deuxième canalisation (6), dans lequel le morceau de tuyau (21) de régulateur de débit (20) est raccordé à l'entrée (14) et est disposé à un niveau complètement en dessous de la sortie (15).

6. Système d'égout ou d'eaux pluviales selon la revendication 5, dans lequel le morceau de tuyau (21) est raccordé de manière amovible à l'entrée (14) au moyen d'un agencement de douille.
